Europäisches Patentamt

European Patent Office

Office européen des brevets

(19)

(11) Numéro de publication: **0 245 692 B1**

(12) **FASCICULE DE BREVET EUROPEEN**

(45) Date de publication de fascicule du brevet:
14.08.91

(51) Int. Cl.⁵: **A61C 1/14**

(21) Numéro de dépôt: 87106136.2

(22) Date de dépôt: 28.04.87

(54) **Dispositif de commande des moyens de fixation d'un outil dans un rotor.**

(30) Priorité: 13.05.86 CH 1937/86

(43) Date de publication de la demande:
19.11.87 Bulletin 87/47

(45) Mention de la délivrance du brevet:
14.08.91 Bulletin 91/33

(84) Etats contractants désignés:
AT DE FR GB IT NL SE

(56) Documents cités:
DE-A- 2 905 484

(73) Titulaire: MOSIMANN, David
13-15, chemin des Grillons
CH-2504 Bienne 6(CH)

(72) Inventeur: MOSIMANN, David
13-15, chemin des Grillons
CH-2504 Bienne 6(CH)

(74) Mandataire: Finck, Dieter et al
Patentanwälte v. Füner, Ebbinghaus, Finck
Mariahilfplatz 2 & 3
W-8000 München 90(DE)

## Description

La présente invention concerne un dispositif de commande manuel des moyens de fixation d'un outil dans un rotor, notamment d'une pièce à main dentaire. Elle concerne plus particulièrement un dispositif comprenant un poussoir et un arbre rotatif, le poussoir venant en contact avec l'arbre en réponse à une force de commande pour agir sur les moyens de fixation.

De tels dispositifs de commande sont bien connus. Par exemple un dispositif de ce genre est utilisé dans la pièce à main dentaire décrite dans le brevet CH 580 421 délivré au nom de la demanderesse. Dans cette réalisation un poussoir, maintenu en position haute par un ressort, vient en contact avec un arbre rotatif en réponse à une force qui le déplace vers le bas. Cet arbre coopère à son tour avec un ressort de fixation disposé à l'intérieur d'un corps cylindrique et l'ensemble, formant le rotor de la pièce à main, est entraîné en rotation rapide par un moteur. La force exercée sur le poussoir est transmise au ressort de fixation pour le comprimer. Cette compression a pour effet d'augmenter le diamètre intérieur du ressort et de permettre d'y introduire le manche d'un outil, par exemple d'une fraise, qui reste emprisonné dans le rotor par le ressort après la disparition de la force. Les parties du poussoir et de l'arbre entrant en contact sont planes dans cette construction. Il en résulte une aire de contact importante et un fort coefficient de frottement entre le poussoir et l'arbre lorsqu'ils se touchent. Ceci n'a en principe aucune importance, puisque le poussoir ne vient appuyer sur l'arbre que lors des changements de fraise, alors que le rotor est au repos. Par ailleurs, pour diminuer l'effort devant être exercé sur le poussoir et améliorer ainsi le confort d'utilisation de la pièce à main, il est fait usage d'un ressort très souple pour maintenir le poussoir en position haute.

Une grande souplesse de ce ressort entraîne toutefois aussi des inconvénients. En effet, lorsque le praticien utilise la pièce à main, le poussoir peut être involontairement mis en contact avec une partie de la cavité buccale. Si la pression résultant de ce contact est suffisante pour que le poussoir comprime le ressort et vienne toucher l'arbre, qui tourne alors à une vitesse pouvant dépasser 100 000 tours par minute, il va s'échauffer rapidement à cause du fort coefficient de frottement existant entre ces deux pièces. Cet échauffement pourra provoquer une brûlure locale et entraîner des mouvements imprévisibles et brusques du patient. Si la partie touchée est sous anesthésie, les brûlures pourraient être plus graves puisque le patient ne les sentant pas n'aura aucune réaction avertissant le praticien qu'il doit déplacer son instrument.

Une autre forme de réalisation d'un tel dispositif a été utilisée dans la tête d'une pièce à main coudée décrite dans la demande de brevet DE 2 905 484. Cette réalisation se distingue du dispositif dont il vient d'être question par le fait que le centre du poussoir présente un enfoncement sphérique, et que l'extrémité de l'arbre, située en regard du poussoir, comporte une tête sphérique convexe, les sommets des deux parties sphériques étant alignés sur l'axe de rotation de l'arbre. Dans ces conditions le coefficient de frottement entre les deux pièces est réduit au minimum, car ces pièces viennent en contact l'une de l'autre suivant une aire sensiblement ponctuelle située sur l'axe de rotation. Cependant en pratique, l'alignement des sommets ne pouvant être réalisé de façon parfaite, l'aire de contact est désaxée et suit sur la tête, lorsque celle-ci est en rotation, un chemin de forme annulaire ayant pour effet d'augmenter le coefficient de frottement entre les deux pièces et leur usure. D'autre part la pression axiale exercée sur la tête produit en outre, à l'endroit du contact, une pression radiale augmentant encore le frottement de l'arbre sur les paliers. Cette solution présente donc en pratique les mêmes inconvénients que celle qui a déjà été décrite, puisqu'elle conduit aussi à des frottements importants, qui augmentent avec l'usure, et à un échauffement indésirable de la tête de la pièce à main. Enfin le poussoir décrit dans ce document, réalisé d'une seule pièce, n'est pas susceptible de comporter, à l'endroit où il touche la tête, le matériau le plus approprié pour obtenir un très faible coefficient de frottement.

La présente invention se propose de pallier ces inconvénients en réalisant un dispositif de commande faisant intervenir deux pièces mobiles en rotation et en translation l'une par rapport à l'autre, se faisant face et susceptibles de se toucher, dans lequel un contact entre ces pièces n'entraîne pas une élévation excessive de leur température.

Dans ce but le dispositif de commande selon l'invention des moyens de fixation du manche d'un outil à l'intérieur d'un arbre au moins partiellement creux, l'arbre faisant partie du rotor d'une pièce à main, notamment dentaire, et tournant dans cette pièce autour d'un axe longitudinal, comprenant :
- un poussoir mobile en translation dans la pièce à main suivant l'axe longitudunal; et
- une coulisse solidaire en rotation de l'arbre, cette coulisse comportant en regard du poussoir, une partie délimitée par une surface de révolution ayant l'axe longitudinal comme axe de symétrie, et pouvant se déplacer longitudinalement sur l'arbre pour agir sur les moyens de fixation pour libérer l'outil du rotor en réponse à une force axiale appliquée sur le poussoir et transmise à la coulisse par une partie du poussoir venant en contact de la partie de la coulisse délimitée par une surface de révolution,

est particulièrement remarquable en ce que, pour réduire le frottement, l'usure et l'échauffement des parties en contact, la partie du poussoir venant toucher la coulisse est constituée par une pastille en matérieu dur rapportée sur le poussoir, en ce que la face de cette pastille disposée en regard de la coulisse est sensiblement plane, et en ce que ces parties viennent se toucher suivant une aire de contact sensiblement ponctuelle centrée sur l'axe longitudinal.

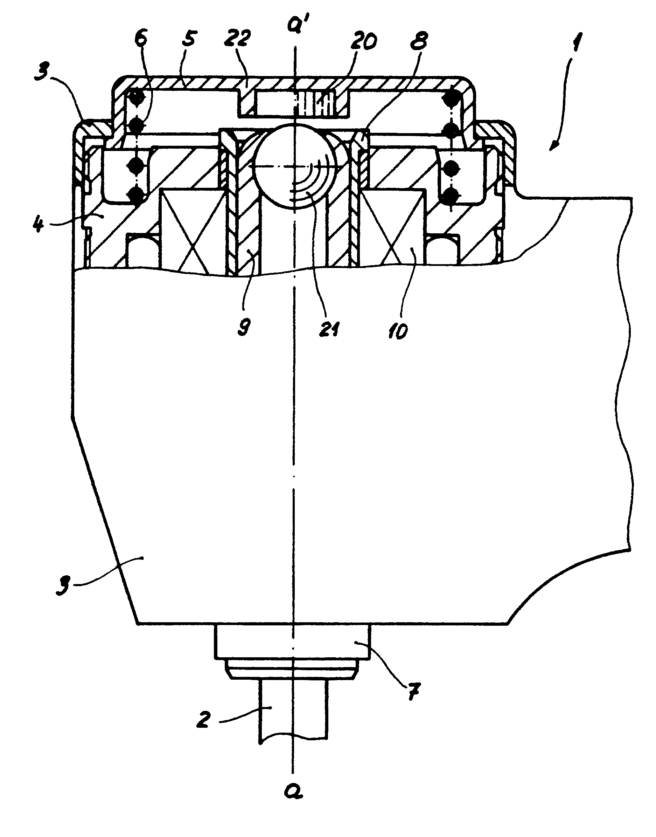

D'autres caractéristiques et avantages de l'invention ressortiront de la description qui va suivre, faite en regard du dessin annexé et donnant, à titre d'exemple explicatif mais nullement limitatif, une forme de réalisation avantageuse d'un dispositif de commande. Sur ce dessin, qui ne comporte qu'une figure unique, est représentée, dans une vue de profil partiellement en coupe, une partie d'une pièce à main dentaire pourvue d'un dispositif de commande selon l'invention.

Le dessin représente l'extrémité d'une pièce à main dentaire 1, appelée tête. La tête est destinée à être introduite dans la cavité buccale d'un patient pour traiter une dent non représentée à l'aide d'un outil 2, par exemple une fraise, dont seul le manche est visible.

La forme d'exécution de la tête représentée sur le dessin est très voisine de celle décrite en détail dans le brevet CH 664 516 déposé au nom de la demanderesse, concernant un dispositif de fixation de l'outil.

La partie fixe de la tête est composée essentiellement d'un bâti 3 à l'intérieur duquel est fixée une bague 4. Un bouton poussoir 5 dépassant du bâti est disposé au-dessus de la bague. Un ressort 6, prenant appui sur la bague et le poussoir, maintient ce dernier en position haute. L'application d'une force verticale suffisante sur le poussoir permet de le déplacer de haut en bas en comprimant le ressort. Ce déplacement est effectué suivant un axe longitudinal aa', autour duquel le poussoir n'est cependant pas libre de pivoter.

A l'intérieur de la tête se trouve un rotor 7 dans lequel est fixé l'outil 2. Le rotor comprend un arbre creux 8, dans lequel est introduit le manche de l'outil, et une coulisse tubulaire 9. L'arbre est supporté par des roulements à billes 10 qui lui permettent de tourner autour de l'axe aa' tout en le maintenant dans une position axiale fixe. La coulisse est disposée à l'intérieur de l'arbre avec lequel elle est solidaire en rotation tout en restant libre de se déplacer longitudinalement. Le rotor comporte encore un dispositif de fixation coopérant avec la coulisse 9 et permettant de bloquer le manche de l'outil 2 au moyen d'organes de serrage. Enfin un moteur non représenté, par exemple une turbine à air, solidaire de l'arbre 8, entraîne le rotor à des vitesses pouvant atteindre plus de 500 000 tours par minute.

Le déblocage du manche de l'outil 2 nécessite l'application d'une force axiale sur la coulisse 9, suffisante pour agir sur les organes de serrage du dispositif de fixation. Cette force est obtenue en appuyant sur le poussoir 5 afin qu'il entre en contact avec la coulisse 9, qui sort légèrement de l'arbre 8 à cet effet. La pression sur le poussoir permet donc de dégager l'outil du rotor afin, par exemple, de le remplacer par un autre.

Dans les réalisations connues de l'art antérieur, comme par exemple dans celle décrite dans le deuxième document cité, la face intérieur du poussoir et l'extrémité de la coulisse située en regard de cette face sont sensiblement planes et parallèles. Les deux pièces viennent donc se toucher suivant une aire de contact importante, entraînant un fort coefficient de frottement entre les parties fixe et mobile de la tête de la pièce à main.

En usage normal cela n'a guère d'importance, puisque le rotor est alors immobile, ainsi que cela avait déjà été relevé. Par contre un contact accidentel pendant que le rotor tourne à grande vitesse entraîne, d'une part, une usure rapide des surfaces en contact et surtout, d'autre part, un échauffement du poussoir dont la température peut facilement dépasser les 100°C qui provoquent déjà une sensation douloureuse sur les muqueuses.

Pour éviter ces difficultés, dans la réalisation selon l'invention une pastille cylindrique plane 20 est disposée sur la face intérieure du poussoir 5 et une bille 21, centrée sur l'axe aa', à l'extrémité supérieure de la coulisse 9, de manière que la pastille et la bille soient en regard l'une de l'autre. La pastille est fixée à l'intérieur d'un logement 22 du poussoir, par exemple par collage, tandis que la bille est retenue dans la coulisse par sertissage. Préférentiellement la pastille et la bille sont réalisées en métal dur fritté.

Les parties du poussoir et de la coulisse venant prendre appui l'une sur l'autre sont, dans cette réalisation, délimitées respectivement par une surface plane et par une surface sphérique. L'aire de contact entre ces parties est par conséquent sensiblement ponctuelle, même en présence d'une force d'appui importante puisque la pastille et la bille sont faites en un matériau dur. D'autre part, la bille étant centrée sur l'axe aa', il en est de même de l'aire de contact.

De la dimension extrêmement réduite de l'aire de contact et du centrage de cette aire sur l'axe aa', qui est aussi l'axe de rotation de la coulisse, il résulte un coefficient de frottement très faible entre le poussoir et le rotor. Or à un faible coefficient de frottement correspondent des effets thermiques réduits entraînant une élévation de température peu importante des parties en contact, ce qui était le but recherché.

Les surfaces délimitant les parties venant en contact peuvent avoir une forme différente de celles décrites, mais au moins une des surfaces doit être une surface de révolution ayant l'axe aa' comme axe de symétrie.

Préférentiellement les deux parties sont réalisées en un matériau dur comme le métal dur fritté, le saphir, l'acier trempé ou la céramique. Il est possible d'utiliser un matérieu différent pour chaque partie.

Les parties venant en contact peuvent, soit appartenir à des éléments rapportés sur le poussoir et la coulisse, soit former avec le poussoir et la coulisse une seule et même pièce.

Il est évident que le dispositif de commande qui vient d'être décrit peut subir encore d'autres modifications et se présenter sous diverses variantes évidentes à l'homme de l'art, sans sortir du cadre de la présente invention.

## Revendications

1. Dispositif de commande des moyens de fixation du manche d'un outil (2) à l'intérieur d'un arbre (8) creux, ledit arbre faisant partie du rotor (7) d'une pièce à main, notamment dentaire, et tournant dans ladite pièce autour d'un axe longitudinal (aa'), comprenant :
   - un poussoir (5) mobile en translation dans ladite pièce à main suivant ledit axe longitudinal (aa'); et
   - une coulisse (9) solidaire en rotation dudit arbre (8), ladite coulisse comportant, en regard du poussoir, une partie (21) délimitée par une surface de révolution ayant ledit axe (aa') comme axe de symétrie, et pouvant se déplacer longitudinalement sur ledit arbre pour agir sur lesdits moyens afin de libérer l'outil (2) du rotor (7) en réponse à une force axiale appliquée sur le poussoir (5) et transmise à la coulisse par une partie (20) du poussoir venant en contact de ladite partie (21) de la coulisse,
   caractérisé en ce que, pour réduire le frottement, l'usure et l'échauffement des parties en contact, ladite partie (20) du poussoir est constituée par une pastille en matériau dur rapportée sur le poussoir, en ce que la face de ladite pastille disposée en regard de la coulisse (9) est sensiblement plane, et en ce que lesdites parties (20, 21) viennent se toucher suivant une aire de contact sensiblement ponctuelle centrée sur ledit axe longitudinal (aa').

2. Dispositif selon la revendication 1, caractérisé en ce que ladite pastille est en acier trempé, en métal dur fritté, en saphir ou en céramique.

## Claims

1. A control device for means for fastening the shank of a tool (2) in the interior of a hollow shaft (8), the said shaft being part of the rotor (7) of a handpiece, namely a dental handpiece, and rotating in the said piece around a longitudinal axis (aa'), comprising:
   - a push-button (5), movable in translation in the said handpiece, following the said longitudinal axis (aa') and
   - a slide (9) integral in rotation with the said shaft (8), the said slide comprising, opposite the push-button, a section (21) defined by a revolving surface having the said axis (aa') as the axis of symmetry, and able to move longitudinally on the said shaft for acting on the said means in order to release the tool (2) from the rotor (7), in response to an axial force applied to the push-button (5) and transmitted to the slide by a section (20) of the push-button coming into contact with the said section (21) of the slide,
   characterised in that for reducing the friction, the wear and tear and overheating of the sections in contact, the said section (20) of the push-button comprises a disc of hard material, mounted on the push-button, in that the face of the said disc, arranged opposite the slide (9), is substantially plane, and in that the said sections (20, 21) come into contact over a substantially point contact area, centered on the said longitudinal axis (aa').

2. A device according to claim 1, characterised in that the said disc is of tempered steel, sintered hard metal, sapphire or ceramics.

## Patentansprüche

1. Vorrichtung zum Betätigen der Befestigungsmittel eines Werkzeuggriffs (2) im Inneren einer hohlen Welle (8), wobei die Welle Teil des Rotors (7) eines insbesondere zahnärztlichen Handstückes ist und sich in dem Stück um eine Längsachse (aa') dreht,
   - mit einem Druckstück (5), das in dem Handstück auf der Längsachse (aa') translativ beweglich ist; und
   - mit einer drehfest mit der Welle (8) verbundenen Führung (9), die dem Druckstück gegenüber ein Teil (21) aufweist, das durch eine die Achse (aa') als Symmetrieachse aufweisende Rotationsfläche begrenzt ist und sich auf der Welle in Längsrichtung verschieben kann, um auf die Mittel zur Lösung des Werkzeuges (2) von dem Rotor (7) als Folge einer Axialkraft einzuwirken, die auf das Druckstück (5) ausgeübt und auf die Führung durch ein Teil (20) des Druckstücks übertragen wird, das in Kontakt mit dem Teil (21) der Führung kommt, dadurch **gekennzeichnet**, daß zur Reduzierung der Reibung, des Verschleißes und der Erwärmung in Kontakt befindlicher Teile das Teil (20) des Druckstücks von einer Scheibe aus hartem Material gebildet wird, die auf dem Druckstück aufgebracht ist, daß die Seite der Scheibe, die gegenüber der Führung (9) angeordnet ist, im wesentlichen eben ist, und daß die Teile (20, 21) an einer im wesentlichen punktförmigen auf der Längsachse (aa') zentrierten Kontaktfläche in Berührung kommen.

2. Vorrichtung nach Anspruch 1, dadurch **gekennzeichnet**, daß die Scheibe aus gehärtetem Stahl, aus hartem Sintermetall, aus Saphir oder aus Keramik besteht.